# FASCICULE DE BREVET EUROPEEN

(11) **EP 2 827 037 B1**
(45) Date de publication et mention de la délivrance du brevet: **13.03.2019**
(21) Numéro de dépôt: 14175907.6
(22) Date de dépôt: 07.07.2014
(51) Int. Cl.: F16L 33/04, F16L 37/096

(54) **Module de raccordement de tuyaux**
Rohranschlussmodul
Pipe connection module

(30) Priorité: 15.07.2013 FR 1356939
(43) Date de publication de la demande: 21.01.2015
(73) Titulaire: Unistar Europe, 92100 Boulogne Billancourt (FR)
(72) Inventeur: Fancello, Michele, 09100 Cagliari (IT)
(74) Mandataire: Decobert, Jean-Pascal

(56) Documents cités:
- EP-B1- 0 642 640
- WO-A1-01/25671
- CH-A- 278 093
- CH-A- 329 139
- FR-A1- 2 298 718
- FR-A1- 2 456 896

## Description

### DOMAINE TECHNIQUE DE L'INVENTION

La présente invention concerne un module de raccordement permettant d'y raccorder des tuyaux en matière souple et, plus particulièrement, un module de raccordement comportant un collier de fixation dont deux extrémités de jonction présentent respectivement un profil non rectiligne, lesdits deux profils étant de formes complémentaires.

### ETAT DE LA TECHNIQUE

La publication brevet FR A1 2456896 décrit un dispositif de serrage d'un tuyau ou analogue sur au moins un élément tubulaire. Y est présenté un collier doté de deux extrémités raccordables.

L'utilisation de modules de raccordement pour connecter un tuyau d'arrosage à un autre tuyau branché à une arrivée d'eau est très courante dans l'irrigation et l'arrosage.

Il existe des modules de raccordement commercialisés mais ils sont conçus pour le raccordement de tuyaux en matière rigide. Néanmoins, pour l'irrigation ou l'arrosage de grandes surfaces, des tuyaux souples sont plus pratiques mais les modules de raccordement existants ne sont pas suffisamment adaptés.

Lors de l'irrigation, un tuyau souple est facilement détaché du module de raccordement. En outre, même si le tuyau est bien maintenu autour du module de raccordement, l'étanchéité entre le tuyau et le module de raccordement n'est pas suffisamment assurée.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

L'invention vise donc à proposer un module de dispositif de raccordement pour remédier au moins en partie aux problèmes et inconvénients ci-dessus.

En particulier, un aspect de l'invention est relatif à un module de raccordement selon la revendication 1.

Le module de raccordement de l'invention a pour effet d'empêcher le détachement de tuyaux raccordés au module de raccordement et d'améliorer l'étanchéité entre le module de raccordement lui-même et les tuyaux tels que ceux en matière souple.

L'invention concerne aussi un système comprenant deux modules et une installation d'irrigation.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- la figure 1 montre deux modules de raccordement selon un mode de réalisation de l'invention ;
- les figures 2 et 3 illustrent respectivement une vue en coupe d'un état intermédiaire et de celui final lors de l'assemblage des modules de raccordement selon un mode de réalisation de l'invention ;
- les figures 4 et 5 illustrent respectivement un collier de fixation du module de raccordement en état fermé et en état ouvert selon un mode de réalisation de l'invention.

Les dessins sont donnés à titre d'exemples et ne sont pas limitatifs de l'invention. Ils constituent des représentations de principes destinées à faciliter la compréhension de l'invention et ne sont pas nécessairement à l'échelle des applications pratiques.

### DESCRIPTION DETAILLEE

Avant d'entamer une revue détaillée de modes de réalisation de l'invention, sont énoncées ci-après des caractéristiques optionnelles qui peuvent éventuellement être utilisées selon toutes associations ou alternativement :
- les profils non rectilignes des extrémités de jonction comprennent chacun, suivant une dimension de largeur du collier de fixation, un premier segment rectiligne, un deuxième segment rectiligne en parallèle du premier segment rectiligne, et un décrochement reliant les premier et deuxième segments rectilignes ;
   le décrochement est perpendiculaire à chacun des premier et deuxième segments rectilignes ;
- le dispositif de serrage comprend deux pattes installées respectivement aux extrémités de jonction et aptes à être fixées l'une à l'autre ;
- la zone de jonction comprend une gorge ;
- une surface interne du collier de fixation comprend une zone circulaire en saille ;
- la gorge est agencée pour recevoir la zone circulaire en saille du collier de fixation de sorte à améliorer l'étanchéité entre la zone d'embouchure du au moins un tuyau et le dispositif de raccordement ;
- la surface externe de la zone de jonction comprend des reliefs et la surface interne du collier de fixation comprend des creux de forme complémentaire à celle desdits reliefs ;
- lesdits reliefs et lesdits creux sont de section circulaire ;
- le module de raccordement comprend un corps principal de forme tubulaire dans un prolongement du dispositif de raccordement ;
- le dispositif de raccordement comprend une partie de butée de forme tubulaire, agencée à relier la zone de jonction et le corps principal et destinée à empêcher l'insertion du corps principal dans la zone d'embouchure du au moins un tuyau ;
- le système de raccordement qui comprend deux modules de raccordement décrits ci-dessus comprend un deuxième dispositif de raccordement comprend une deuxième zone de jonction dont un diamètre externe est égal ou inférieur à un diamètre interne d'un deuxième tuyau et un deuxième dispositif de serrage comprenant un deuxième collier de fixation apte à être disposé autour d'une surface externe d'une zone d'embouchure du deuxième tuyau ; la zone d'embouchure étant apte à être raccordée au deuxième dispositif de raccordement par emmanchement sur une surface externe de la deuxième zone de jonction ;
- le deuxième dispositif de raccordement comprend un deuxième corps principal de forme tubulaire dans le prolongement du deuxième dispositif de raccordement ; le deuxième dispositif de raccordement et le corps principal étant formés en une seule portion d'un même tube ;
- le deuxième dispositif de raccordement comprend un deuxième corps principal de forme tubulaire dans le prolongement du deuxième dispositif de raccordement ; le deuxième dispositif de raccordement et le corps principal étant deux tubes différents ;
- le corps principal comprend une couronne périphérique présentant un diamètre externe supérieur à un diamètre externe du reste du corps principal, le deuxième dispositif de raccordement comprenant au moins une installée en dehors de la deuxième zone de jonction et configurée pour raccrocher à la couronne périphérique et se verrouiller ;
- une installation d'irrigation qui comporte au moins un module de raccordement décrit ci-dessus ou un système de raccordement décrit ci-dessus et au moins un tuyau souple.

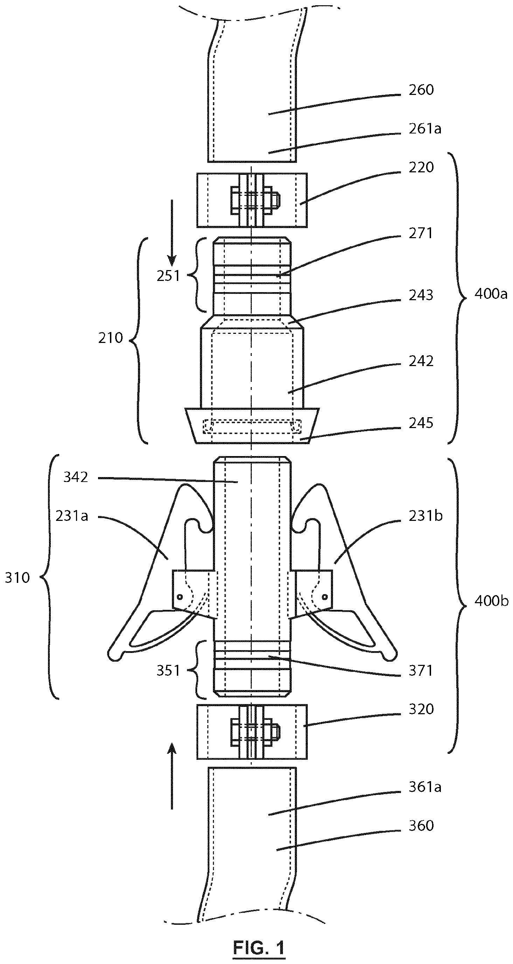

Les figures 1 à 3 montrent des états différents de raccordement de deux tuyaux 260 et 360 respectivement à deux modules de raccordement 400a et 400b d'un système de raccordement selon un mode de réalisation de l'invention.

La figure 1 montre les modules de raccordement 400a, 400b assemblables selon une situation où les deux tuyaux 260, 360 ne sont pas raccordés aux modules 400a, 400b et les deux modules 400a, 400b ne sont pas assemblés.

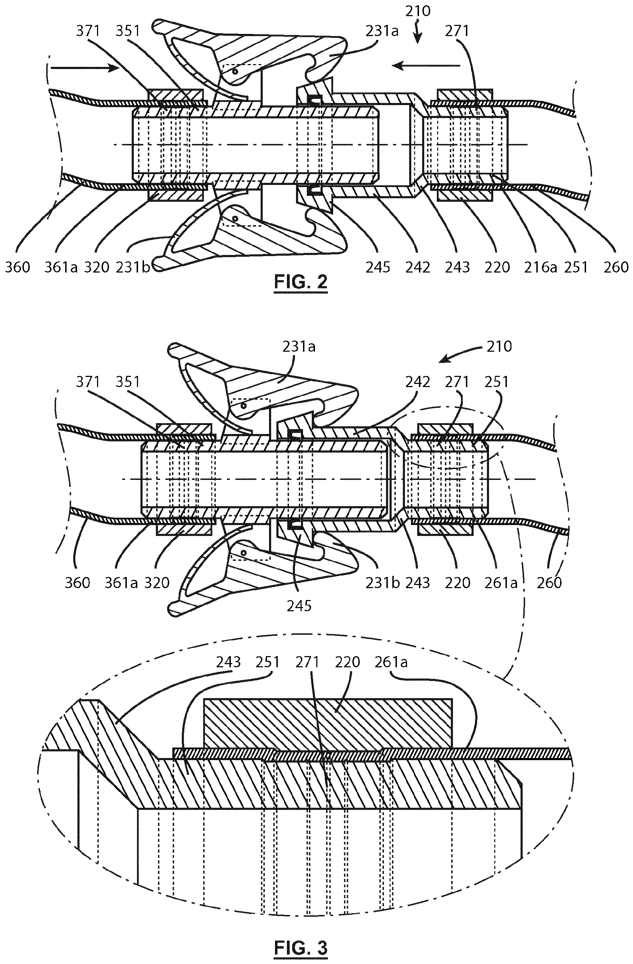

Les figures 2 et 3 montrent respectivement une vue en coupe d'un état intermédiaire et de celui final lors de l'assemblage des modules de raccordement 400a et 400b selon le mode de réalisation de l'invention.

Le tuyau 260 comporte deux extrémités dont l'une est apte à être raccordée au module de raccordement 400a et l'autre est apte à être raccordée à une arrivée d'eau ou un autre élément de l'installation tel un autre module (non illustré sur les figures). Le deuxième tuyau 360 comporte également deux extrémités dont l'une est apte à être raccordée au module de raccordement 400b et l'autre est libre (non illustré en figures).

Le module de raccordement 400a comprend un dispositif de raccordement 210 et un dispositif de serrage. Le dispositif de serrage est configuré pour serrer le tuyau 260 apte à être disposé autour du dispositif raccordement 210 de sorte à améliorer l'étanchéité entre le tuyau 260 et le dispositif de raccordement 210.

Le dispositif de raccordement 210, ayant un corps de forme tubulaire, comprend une zone de jonction 251 configurée pour recevoir une zone d'embouchure 261a du tuyau 260 par emmanchement sur une surface externe de la zone de jonction 251. La zone de jonction 251 est de forme tubulaire.

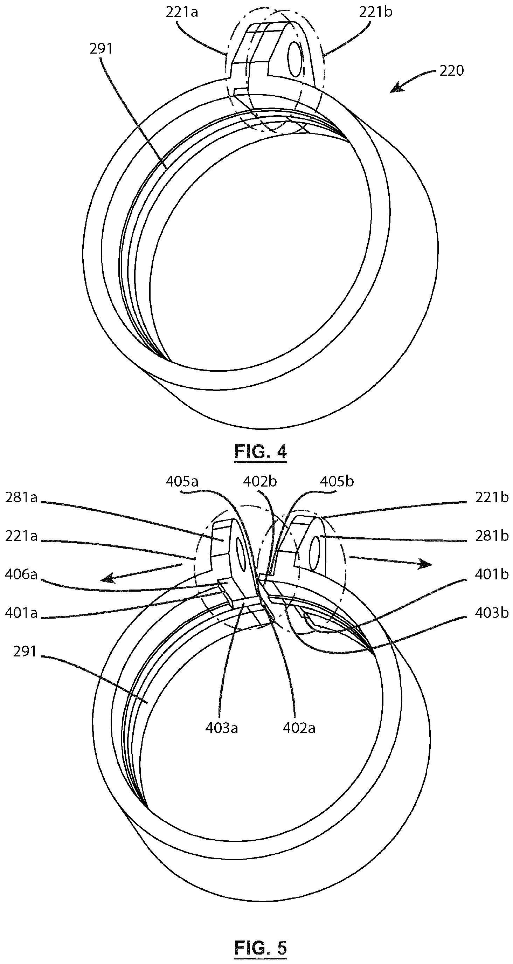

Le dispositif de serrage comprend un collier de fixation 220 apte à être disposé autour d'une surface externe de ladite zone d'embouchure 261a. Le collier de fixation 220 est configuré pour serrer ladite zone d'embouchure 261a apte à être disposée autour de la zone de jonction 251 du dispositif de raccordement 210. Un exemple du collier de fixation 220 est détaillé en figures 4, 5 et sera décrit dans des paragraphes suivants.

De manière préférentielle mais non limitative, la zone de jonction 251 du dispositif de raccordement 210 comprend une gorge 271 dont un diamètre externe est inférieur à un diamètre externe du reste du dispositif de raccordement 210. La gorge 271 est agencée pour recevoir une zone circulaire 291 en saille d'une surface interne du collier de fixation 220 de sorte à améliorer l'étanchéité entre la zone d'embouchure 261a du tuyau 260 et le dispositif de raccordement 210.

De plus, afin d'empêcher le détachement du tuyau 260 du module de raccordement 400a, la surface externe de la zone de jonction 251 comprend préférentiellement des reliefs, comme illustré en figure 3. Avantageusement, lesdits reliefs sont de section circulaire.

De manière préférentielle mais non limitative, la surface interne du collier de fixation 220 comprend des creux qui sont de forme complémentaire à celle des reliefs de la surface externe de la zone de jonction 251. Les creux sont avantageusement de section circulaire.

Le tuyau 260 est préférentiellement en matière souple de sorte à être capable de se déformer conformément à la forme de la gorge 271 et à celle de la zone circulaire 291, et aux formes desdits reliefs de la zone de jonction 251 et aux celles desdites creux du collier de fixation 220. Il peut être constitué avec une enveloppe multicouches et une armature textile

Ainsi, lorsque le collier de fixation 220 est disposé autour de la zone d'embouchure 261a du tuyau 260 et en état de serrage, la déformation ci-dessus de la zone d'embouchure 261a du tuyau 260 permet d'assurer l'étanchéité entre la zone d'embouchure 261a du tuyau 260 et la zone de jonction 251 du dispositif de raccordement 210.

De préférence, le module de raccordement 400a comprend en outre un corps principal 242 de forme tubulaire dans un prolongement du dispositif de raccordement 210. Le corps principal 242 présente préférentiellement mais non limitativement un diamètre externe supérieur à un diamètre externe de la zone de jonction 251, comme illustré en figures 1 à 3. On verra plus loin que cet accroissement de diamètre peut aussi servir à former, dans le corps 242 un organe femelle de réception d'une partie tubulaire de même diamètre que la zone de jonction 251. De plus, dans un mode de réalisation encore plus avantageux, le dispositif de raccordement 210 comprend une partie de butée 243 de forme tubulaire. Cette partie de butée 243 est agencée à relier la zone de jonction 251 et le corps principal 242 et destinée à empêcher l'insertion du corps principal 242 dans la zone d'embouchure 261a du tuyau 260.

La structure du module de raccordement 400b de l'invention est similaire à celle du module 400a, en ce qui concerne le dispositif de raccordement.

Le module de raccordement 400b comporte un deuxième dispositif de raccordement 310 et un deuxième dispositif de serrage configuré pour serrer le deuxième tuyau 360 apte à être disposé autour du deuxième dispositif de raccordement 310.

Le deuxième dispositif de raccordement 310, ayant un corps de forme tubulaire, comprend une deuxième zone de jonction 351 dont un diamètre externe est égal ou inférieur à un diamètre interne du deuxième tuyau 360. La deuxième zone de jonction 351 est configurée pour recevoir une zone d'embouchure 361a du deuxième tuyau 360 par emmanchement sur une surface externe de la deuxième zone de jonction 351. La structure, la forme de la surface externe, et la fonctionnalité de la deuxième zone de jonction 351 sont similaires à celles de la zone de jonction 251.

Le deuxième dispositif de serrage comprend un deuxième collier de fixation 320 dont la structure, la forme de la surface interne comprenant une deuxième zone circulaire en saille, et la fonctionnalité sont similaires à celles du collier de fixation 220. La description détaillée du deuxième collier de fixation 320 sera fournie dans des paragraphes suivants concernant les figures 4 et 5.

De manière préférentielle mais non limitative, la deuxième zone de jonction 351 du deuxième dispositif de raccordement 310 comprend une deuxième gorge 371 dont la structure et la fonctionnalité sont similaires à celles de la gorge 271.

Le deuxième tuyau 360, comme le premier tuyau 260, est préférentiellement en matière souple de sorte à être capable de se déformer conformément à la forme de la deuxième gorge 371 et à celle de ladite deuxième zone circulaire, et aux formes des reliefs de la deuxième zone de jonction 351 et aux celles des creux du deuxième collier de fixation 320.

Ainsi, lorsque le deuxième collier de fixation 320 est disposé autour de la deuxième zone d'embouchure 361a du deuxième tuyau 360 et en état de serrage, la déformation de la deuxième zone d'embouchure 361a du tuyau 360 permet d'assurer l'étanchéité entre la deuxième zone d'embouchure 361a du deuxième tuyau 360 et la deuxième zone de jonction 351 du deuxième dispositif de raccordement 310.

De préférence, le module de raccordement 400b comprend en outre un deuxième corps principal 342 de forme tubulaire dans un prolongement du deuxième dispositif de raccordement 310. Dans le présent mode de réalisation, le deuxième corps principal 342 présente un diamètre externe égal à un diamètre externe de la deuxième zone de jonction 351, comme illustré en figures 1 à 3.

Dans un autre mode de réalisation, le deuxième corps principal 342 peut présenter un diamètre externe supérieur au diamètre externe de la deuxième zone de jonction 351.

Dans ce mode de réalisation, le deuxième corps principal 342 et le corps principal 242 sont deux tubes différents qui sont aptes à être assemblés bout à bout. A cette fin, le corps principal 242 comprend une couronne périphérique 245 présentant un diamètre externe supérieur à un diamètre externe du reste du corps principal 242, comme illustré en figure 1 à 3.

De l'autre côté, le deuxième dispositif de raccordement 310 comprend en outre deux pinces 231a, 231b installées sur une surface externe du deuxième corps principal 342 en étant situées diamétralement opposées sur la surface externe de ce dernier et en dehors de la deuxième zone de jonction 351. Les deux pinces 231a, 231b sont aptes à s'accrocher à la couronne périphérique 245 et se verrouiller pour connecter deux corps principaux 242, 342 l'un par rapport à l'autre.

Dans ce mode de réalisation, les pinces 231a, 231b servent également de partie de butée destinée à empêcher l'insertion du deuxième corps principal 342 dans la deuxième zone d'embouchure 361a du deuxième tuyau 360.

Néanmoins, dans un autre mode de réalisation, le deuxième dispositif de raccordement 310 peut comprendre une deuxième partie de butée de forme tubulaire. Ladite deuxième partie de butée est alors agencée pour relier la deuxième zone de jonction 351 et le deuxième corps principal 342 et destinée à empêcher l'insertion du deuxième corps principal 342, comme décrit ci-dessus.

L'invention n'est pas limitée par l'exemple ci-dessus de l'assemblage des corps principaux 242, 342 réalisé par les pinces 231a, 231b et la couronne périphérique 245. Ledit assemblage des corps principaux 242, 342 peut être réalisé par d'autres moyens pour fournir une fonction équivalente à la fonction ci-dessus sans pour autant sortir du cadre de la présente invention.

De plus, dans un autre mode de réalisation, le deuxième corps principal 342 et le corps principal 242 sont formés en une seule portion d'un même tube.

De plus, dans un mode de réalisation encore plus avantageux, l'invention permet d'installer un dispositif de projection d'eau entre les deux modules de raccordement 400a, 400b. Dans ce mode de réalisation, un des modules de raccordement 400a, 400b comprend en outre un dispositif intermédiaire de raccordement (non illustré en figures) configuré pour y raccorder le dispositif de projection d'eau.

Le dispositif intermédiaire de raccordement comprend un corps et deux extrémités de raccordement, chacune avec un module intermédiaire de fixation et une embouchure intermédiaire pour raccorder, par exemple par filetage, le dispositif de projection d'eau tel qu'un tube montant avec une buse ou tout autre moyen de projection d'eau.

Le dispositif intermédiaire de raccordement est préférentiellement monté en dehors des première ou deuxième zones de jonction 251, 351 ; par exemple sur le corps principal 242 ou sur le deuxième corps principal 342.

Les figures 4 et 5 montrent respectivement le collier de fixation 220 à l'état fermé et à l'état ouvert.

Le collier de fixation 220 comprend deux extrémités de jonction 221a, 221b présentant respectivement un profil non rectiligne. Les deux profils des extrémités de jonction 221a, 221b sont de formes complémentaires, comme illustré en figures 4 et 5. On entend par non rectiligne que les profils ne sont pas uniquement une portion d'une seule droite. Il peut s'agir de profils courbes ou droits mais avec des variations de direction.

Lesdits profils non rectilignes de formes complémentaires permettent de renforcer l'étanchéité entre le tuyau 260 et le dispositif de raccordement 210 et également d'empêcher le détachement du tuyau 260 du module de raccordement 400a.

Le profil non rectiligne de l'extrémité de jonction 221a comprend, suivant une dimension de largeur du collier de fixation 220, un premier segment rectiligne 401a, un deuxième segment rectiligne 402a en parallèle du premier segment rectiligne 401a, et un décrochement 403a reliant les premier et deuxième segments rectilignes 401a, 402a. Le décrochement 403a est avantageusement perpendiculaire à chacun des premier et deuxième segments rectilignes 401a, 402a.

Le profil non rectiligne de l'extrémité de jonction 221b comprend également, suivant la dimension de largeur du collier de fixation 220, deux segments rectilignes 401b et 402b qui sont parallèles entre eux et tous les deux sont perpendiculaires à un décrochement 403b reliant les segments rectilignes 401b et 402b.

L'extrémité de jonction 221a comprend en outre une surface distale 405a et une surface proximale 406a qui toutes les deux se terminent par un bord de l'extrémité de jonction 221a. L'extrémité de jonction 221b comprend également une surface distale 405b et une surface proximale qui toutes les deux se terminent par un bord de l'extrémité de jonction 221b.

Comme illustré en figures 4 et 5, la surface distale 405a de l'extrémité de jonction 221a est apte à être recouverte par la surface proximale de l'extrémité de jonction 221b. De plus, pour assurer le serrage du collier de fixation 220 disposé autour du tuyau 260, la surface 405a présente une forme complémentaire à la forme de la surface proximale, notamment dans le cas où les surfaces 405a et SP ne sont pas planes. Dans la présente mode de réalisation, les surfaces 405a et SP sont planes.

La surface distale 405b de l'extrémité de jonction 221b est également apte à être recouverte par la surface proximale 406a de l'extrémité de jonction 221a, et présente une forme complémentaire à la forme de la surface proximale 406a. Les surfaces 405b et 406a sont de préférence planes.

L'invention n'est pas limitée par l'exemple ci-dessus de la forme des profils et/ou celle des surfaces proximales/distales des extrémités de jonction 221a, 221b. Les extrémités de jonction 221a, 221b peuvent comprendre des profils et/ou des surfaces proximales/distales présentant d'autres formes, sans pour autant sortir du cadre de la présente invention. On comprend néanmoins que l'intime coopération des extrémités du collier augmente la cohésion de l'assemblage et l'étanchéité.

Le collier de fixation 220 est avantageusement en matière plastique dur mais il est au moins légèrement déformable en flexion de sorte que l'utilisateur puisse ouvrir les extrémités de jonction 221a, 221b et disposer le collier de fixation 220 autour du tuyau 260 reçu par emmanchement sur la surface externe de la zone de jonction 251. Ladite matière plastique du collier de fixation 220 permet de serrer le tuyau 260 disposé autour du dispositif raccordement 210 puisque les extrémités de jonction 221a, 221b ont toujours tendance à se rejoindre. Comme illustré en figure 4, le collier de fixation 220 est parfaitement fermé lorsqu'il est en état de relaxation.

D'ailleurs, afin d'améliorer l'étanchéité entre le tuyau 260 et le dispositif de raccordement 210, le dispositif de serrage du dispositif de raccordement 210 comprend deux pattes 281a, 281b installées respectivement aux extrémités de jonction 221a, 221b et aptes à être fixées l'une à l'autre. Par exemple, les deux pattes 281a, 281b coopèrent avec un écrou et une vis pour les solidariser. Le collier de fixation 220 est donc capable d'être serré.

Les pattes 281a, 281b sont par exemple des parties à angle droit vers l'extérieur relativement aux extrémités jointes du collier.

De manière préférentielle mais non limitative, les pattes 281a, 281b et le collier de fixation 220 sont formés en une seule pièce.

L'invention n'est pas limitée par l'exemple ci-dessus des pattes 281a, 281b du dispositif de raccordement 210. D'autres moyens présentant une fonction équivalente à celle ci-dessus peuvent être employés sans pour autant sortir du cadre de la présente invention, tel, un lien circulaire de serrage qui entoure le collier et dont le diamètre est réglable.

De plus, comme illustré en figure 4, une surface interne du collier de fixation 220 comprend la zone circulaire 291 en saille comme décrit précédemment. Ainsi, la gorge 271 peut recevoir la zone circulaire 291 de sorte à améliorer l'étanchéité entre la zone d'embouchure 261a du tuyau 260 et le dispositif de raccordement 210.

La structure, la forme de la surface interne, et la fonctionnalité du deuxième collier de fixation 320 sont similaires à celles du collier de fixation 220.

Le module de raccordement de l'invention a pour effet d'empêcher le détachement de tuyaux raccordés au module de raccordement et d'améliorer l'étanchéité entre et le module de raccordement lui-même et les tuyaux tels que ceux en matière souple utilisables dès lors dans l'irrigation et l'arrosage de grandes surfaces de terrains agricoles.

L'invention n'est pas limitée aux modes de réalisation précédemment décrits mais s'étend à tout mode de réalisation couvert par les revendications.

## Revendications

1. Module (400a, 400b) de raccordement d'une zone d'embouchure (261a) d'au moins un tuyau (260), comprenant :
- un dispositif de raccordement (210) ayant un corps de forme tubulaire, comprenant au moins une zone de jonction (251) configurée pour recevoir la zone d'embouchure (261a) du au moins un tuyau (260) par emmanchement sur une surface externe de la zone de jonction (251),
- au moins un dispositif de serrage comprenant un collier de fixation (220) apte à être disposé autour d'une surface externe de ladite zone d'embouchure (261a) et configuré pour serrer ladite zone d'embouchure (261a) apte à être disposée autour de la zone de jonction (251) du dispositif raccordement (210), module (400a, 400b) dans lequel :
- le collier de fixation (220) comprend deux extrémités de jonction (221a, 221b) présentant respectivement un profil non rectiligne, les deux profils des extrémités de jonction (221a, 221b) étant de formes complémentaires, les extrémités de jonction (221a, 221b) comprenant chacune une surface distale (405a, 405b) et une surface proximale (406a, SP) dont chacune des deux surfaces se terminent par un bord de l'une des extrémités de jonction (221a, 221b) suivant leur profil non rectiligne, la surface distale de chacune des extrémités de jonction étant recouverte par la surface proximale de l'autre extrémité de jonction dans un état fermé du collier de fixation (220) ;
- les profils non rectilignes des extrémités de jonction (221a, 221b) comprennent chacun, suivant une dimension de largeur du collier de fixation (220), un premier segment rectiligne (401a, 401b), un deuxième segment rectiligne (402a, 402b) en parallèle du premier segment rectiligne (401a, 401b), et un décrochement (403a, 403b) reliant les premier et deuxième segments rectilignes (401a, 402a ; 401b, 402b) ;
**caractérisé par le fait que** la somme de la longueur du premier segment rectiligne (401a, 401b) et de la longueur du deuxième segment rectiligne (402a, 402b) est approximativement égale à la largeur du collier de fixation (220).

2. Module (400a, 400b) selon la revendication précédente dans lequel le décrochement (403a) est perpendiculaire à chacun des premier et deuxième segments rectilignes (401a, 402a).

3. Module (400a, 400b) selon l'une des revendications précédentes, dans lequel la surface distale (405a) de l'une des extrémités de jonction (221a) présente une forme complémentaire à la forme de la surface proximale de l'autre extrémité de jonction (221b).

4. Module (400a, 400b) selon l'une quelconque des revendications précédentes dans lequel le dispositif de serrage comprend deux pattes (281a, 281b) installées respectivement aux extrémités de jonction (221a, 221b) et aptes à être fixées l'une à l'autre.

5. Module (400a, 400b) selon l'une quelconque des revendications précédentes dans lequel la zone de jonction (251) comprend une gorge (271).

6. Module (400a, 400b) selon l'une quelconque des revendications précédentes dans lequel une surface interne du collier de fixation (220) comprend une zone circulaire (291) en saille.

7. Module (400a, 400b) selon les deux revendications précédentes dans lequel la gorge (271) est agencée pour recevoir la zone circulaire (291) en saille du collier de fixation (220) de sorte à améliorer l'étanchéité entre la zone d'embouchure (261a) du au moins un tuyau (260) et le dispositif de raccordement (210).

8. Module (400a, 400b) selon l'une quelconque des revendications précédentes dans lequel la surface externe de la zone de jonction (251) comprend des reliefs et la surface interne du collier de fixation (220) comprend des creux de forme complémentaire à celle desdits reliefs.

9. Module (400a, 400b) selon la revendication précédente dans lequel lesdits reliefs et lesdits creux sont de section circulaire.

10. Module (400a, 400b) selon l'une quelconque des revendications précédentes comprenant un corps principal (242) de forme tubulaire dans un prolongement du dispositif de raccordement (210).

11. Module (400a, 400b) selon la revendication précédente dans lequel le dispositif de raccordement (210) comprend une partie de butée (243) de forme tubulaire, agencée à relier la zone de jonction (251) et le corps principal (242) et destinée à empêcher l'insertion du corps principal (242) dans la zone d'embouchure (261a) du au moins un tuyau (260).

12. Système de raccordement qui comprend deux modules (400a, 400b) selon la revendication 10 ou 11 dans lequel un deuxième dispositif de raccordement (310) comprend un deuxième tuyau (360) et une deuxième zone de jonction (351) dont un diamètre externe est égal ou inférieur à un diamètre interne du deuxième tuyau (360) et un deuxième dispositif de serrage comprenant un deuxième collier de fixation (320) apte à être disposé autour d'une surface externe d'une zone d'embouchure (361a) du deuxième tuyau (360) ; la zone d'embouchure (361a) étant apte à être raccordée au deuxième dispositif de raccordement (310) par emmanchement sur une surface externe de la deuxième zone de jonction (351).

13. Système de raccordement selon la revendication précédente dans lequel le deuxième dispositif de raccordement (310) comprend un deuxième corps principal (342) de forme tubulaire dans le prolongement du deuxième dispositif de raccordement (310) ; le deuxième dispositif de raccordement (310) et le corps principal (242) étant formés en une seule portion d'un même tube.

14. Système de raccordement selon la revendication 12 dans lequel le deuxième dispositif de raccordement (310) comprend un deuxième corps principal (342) de forme tubulaire dans le prolongement du deuxième dispositif de raccordement (310) ; le deuxième dispositif de raccordement (310) et le corps principal (242) étant deux tubes différents.

15. Système de raccordement selon la revendication précédente dans lequel le corps principal (242) comprend une couronne périphérique (245) présentant un diamètre externe supérieur à un diamètre externe du reste du corps principal (242), le deuxième dispositif de raccordement (310) comprenant au moins une pince (231a, 231b) installée en dehors de la deuxième zone de jonction (351) et configurée pour raccrocher à la couronne périphérique (245) et se verrouiller.

16. Installation d'irrigation qui comporte au moins un module (400a, 400b) de raccordement selon l'une quelconque des revendications 1 à 11 ou un système de raccordement selon l'une quelconque des revendications 12 à 15 et au moins un tuyau souple (260).

## Patentansprüche

1. Modul (400a, 400b) zum Anschließen eines Mündungsbereichs (261a) mindestens eines Schlauches (260), umfassend:
- eine Anschlussvorrichtung (210), die einen rohrförmigen Körper besitzt, der mindestens einen Fügebereich (251) umfasst, der dafür ausgebildet ist, den Mündungsbereich (261a) des mindestens einen Schlauches (260) durch Aufstecken auf eine Außenfläche des Fügebereichs (251) aufzunehmen,
- mindestens eine Spannvorrichtung, die eine Klemmschelle (220) umfasst, die dazu geeignet ist, um eine Außenfläche des Mündungsbereichs (261a) angeordnet zu werden und dafür ausgebildet ist, den Mündungsbereich (261a), der dazu geeignet ist, um den Fügebereich (251) der Anschlussvorrichtung (210) angeordnet zu werden, zu verspannen, wobei bei dem Modul (400a, 400b):
- die Klemmschelle (220) zwei Fügeenden (221a, 221b) umfasst, die jeweils ein nicht geradliniges Profil aufweisen, wobei die zwei Profile der Fügeenden (221a, 221b) von komplementären Formen sind, wobei die Fügeenden (221a, 221b) jedes eine distale Fläche (405a, 405b) und eine proximale Fläche (406a, SP) umfassen, von denen jede der zwei Flächen mit einer Kante eines der Fügeenden (221a, 221b) endet, die ihrem nicht geradlinigen Profil folgt, wobei in einem geschlossenen Zustand der Klemmschelle (220) die distale Fläche jedes der Fügeenden von der proximalen Fläche des anderen Fügeendes bedeckt wird;
- die nicht geradlinigen Profile der Fügeenden (221a, 221b) jedes, einer Breitenabmessung der Klemmschelle (220) folgend, ein erstes geradliniges Segment (401a, 401b), ein zum ersten geradlinigen Segment (401a, 401b) paralleles zweites geradliniges Segment (402a, 402b), und einen Absatz (403a, 403b) umfasst, der das erste und zweite geradlinige Segment (401a, 402a; 401b, 402b) verbindet;
**dadurch gekennzeichnet, dass**
- die Summe der Länge des ersten geradlinigen Segments (401a, 401b) und der Länge des zweiten geradlinigen Segments (402a, 402b) in etwa gleich der Breite der Klemmschelle (220) ist.

2. Modul (400a, 400b) nach dem vorhergehenden Anspruch, wobei der Absatz (403a) zu jedem aus dem ersten und zweiten geradlinigen Segment (401a, 402a) senkrecht ist.

3. Modul (400a, 400b) nach einem der vorhergehenden Ansprüche, wobei die distale Fläche (405a) von einem der Fügeenden (221a) eine Form aufweist, die zur Form der proximalen Fläche des anderen Fügeendes (221b) komplementär ist.

4. Modul (400a, 400b) nach einem der vorhergehenden Ansprüche, wobei die Spannvorrichtung zwei Laschen (281a, 281b) umfasst, die jeweils an den Fügeenden (221a, 221b) angebracht und dazu geeignet sind, aneinander befestigt zu werden.

5. Modul (400a, 400b) nach einem der vorhergehenden Ansprüche, wobei der Fügebereich (251) eine Kehle (271) umfasst.

6. Modul (400a, 400b) nach einem der vorhergehenden Ansprüche, wobei eine Innenfläche der Klemmschelle (220) einen kreisrunden vorspringenden Bereich (291) umfasst.

7. Modul (400a, 400b) nach den zwei vorhergehenden Ansprüchen, wobei die Kehle (271) dafür eingerichtet ist, den kreisrunden vorspringenden Bereich (291) der Klemmschelle (220) derart aufzunehmen, dass die Dichtigkeit zwischen dem Mündungsbereich (261a) des mindestens einen Schlauches (260) und der Anschlussvorrichtung (210) verbessert wird.

8. Modul (400a, 400b) nach einem der vorhergehenden Ansprüche, wobei die Außenfläche des Fügebereichs (251) Erhebungen umfasst und die Innenfläche der Klemmschelle (220) Vertiefungen von zu derjeniger der Erhebungen komplementärer Form umfasst.

9. Modul (400a, 400b) nach dem vorhergehenden Anspruch, wobei die Erhebungen und die Vertiefungen von kreisrundem Querschnitt sind.

10. Modul (400a, 400b) nach einem der vorhergehenden Ansprüche, einen Hauptkörper (242) von rohrförmiger Form in einer Verlängerung der Anschlussvorrichtung (210) umfassend.

11. Modul (400a, 400b) nach dem vorhergehenden Anspruch, wobei die Anschlussvorrichtung (210) ein Anschlagteil (243) von rohrförmiger Form umfasst, das dazu eingerichtet ist, den Fügebereich (251) und den Hauptkörper (242) zu verbinden und dazu bestimmt ist, das Einführen des Hauptkörpers (242) in den Mündungsbereich (261a) des mindestens einen Schlauches (260) zu verhindern.

12. Anschlusssystem, das zwei Module (400a, 400b) nach Anspruch 10 oder 11 umfasst, wobei eine zweite Anschlussvorrichtung (310) einen zweiten Schlauch (360) und einen zweiten Fügebereich (351) umfasst, von dem ein Außendurchmesser gleich oder kleiner einem Innendurchmesser des zweiten Schlauches (360) ist, und eine zweite Spannvorrichtung, die eine zweite Klemmschelle (320) umfasst, die dazu geeignet ist, um eine Außenfläche eines Mündungsbereichs (361a) des zweiten Schlauches (360) angeordnet zu werden; wobei der Mündungsbereich (361a) dazu geeignet ist, durch Aufstecken auf eine Außenfläche des zweiten Fügebereichs (351) an die zweite Anschlussvorrichtung (310) angeschlossen zu werden.

13. Anschlusssystem nach dem vorhergehenden Anspruch, wobei die zweite Anschlussvorrichtung (310) einen zweiten Hauptkörper (342) von rohrförmiger Form in der Verlängerung der zweiten Anschlussvorrichtung (310) umfasst; wobei die zweite Anschlussvorrichtung (310) und der Hauptkörper (242) aus einem einzigen Abschnitt ein und desselben Rohres gebildet sind.

14. Anschlusssystem nach Anspruch 12, wobei die zweite Anschlussvorrichtung (310) einen zweiten Hauptkörper (342) von rohrförmiger Form in der Verlängerung der zweiten Anschlussvorrichtung (310) umfasst; wobei die zweite Anschlussvorrichtung (310) und der Hauptkörper (242) zwei verschiedene Rohre sind.

15. Anschlusssystem nach dem vorhergehenden Anspruch, wobei der Hauptkörper (242) einen Umfangskranz (245) umfasst, der einen Außendurchmesser aufweist, der größer als ein Außendurchmesser des Restes des Hauptkörpers (242) ist, wobei die zweite Anschlussvorrichtung (310) mindestens eine Klaue (231a, 231b) umfasst, die außerhalb des zweiten Fügebereichs (351) angebracht und dafür ausgebildet ist, am Umfangskranz (245) einzuhaken und sich zu verriegeln.

16. Bewässerungsanlage, die mindestens ein Anschlussmodul (400a, 400b) nach einem der Ansprüche 1 bis 11 oder ein Anschlusssystem nach einem der Ansprüche 12 bis 15 und mindestens einen biegsamen Schlauch (260) umfasst.

## Claims

1. Module (400a, 400b) for connecting a nozzle zone (261a) of at least one pipe (260), comprising:
- a connection device (210) having a body having a tubular shape, comprising at least one junction zone (251) configured to receive the nozzle zone (261a) of the at least one pipe (260) via fitting onto an outer surface of the junction zone (251),
- at least one clamping device comprising a clamping collar (220) suitable for being positioned around an outer surface of said nozzle zone (261a) and configured to clamp said nozzle zone (261a) suitable for being positioned around the junction zone (251) of the connection device (210), in which module (400a, 400b):
- the clamping collar (220) comprises two junction ends (221a, 221b) respectively having a non-rectilinear profile, the two profiles of the junction ends (221a, 221b) having complementary shapes, the junction ends (221a, 221b) each comprising a distal surface (405a, 405b) and a proximal surface (406a, SP), each of the two surfaces of which end in an edge of one of the junction ends (221a, 221b) along their non-rectilinear profile, the distal surface of each of the junction ends being covered by the proximal surface of the other junction end in a closed state of the clamping collar (220);
- the non-rectilinear profiles of the junction ends (221a, 221b) each comprise, along a width dimension of the clamping collar (220), a first rectilinear segment (401a, 401b), a second rectilinear segment (402a, 402b) in parallel to the first rectilinear segment (401a, 401b), and an offset (403a, 403b) connecting the first and second rectilinear segment (401a, 402a; 401b, 402b);
**characterised by** the fact that the sum of the length of the first rectilinear segment (401a, 401b) and the length of the second rectilinear segment (402a, 402b) is approximately equal to the width of the clamping collar (220).

2. Module (400a, 400b) according to the previous claim, wherein the offset (403a) is perpendicular to each of the first and second rectilinear segment (401a, 402a).

3. Module (400a, 400b) according to one of the previous claims, wherein the distal surface (405a) of one of the junction ends (221a) has a shape complementary to the shape of the proximal surface of the other junction end (221b).

4. Module (400a, 400b) according to any one of the previous claims, wherein the clamping device comprises two lugs (281a, 281b) installed at the junction ends (221a, 221b), respectively, and suitable for being fastened to each other.

5. Module (400a, 400b) according to any one of the previous claims, wherein the junction zone (251) comprises a groove (271).

6. Module (400a, 400b) according to any one of the previous claims, wherein an inner surface of the clamping collar (220) comprises a protruding circular zone (291).

7. Module (400a, 400b) according to the previous two claims, wherein the groove (271) is arranged to receive the protruding circular zone (291) of the clamping collar (220) in such a way as to improve the seal between the nozzle zone (261a) of the at least one pipe (260) and the connection device (210).

8. Module (400a, 400b) according to any one of the previous claims, wherein the outer surface of the junction zone (251) comprises reliefs and the inner surface of the clamping collar (220) comprises hollows having a shape complementary to that of said reliefs.

9. Module (400a, 400b) according to the previous claim, wherein said reliefs and said hollows have a circular cross-section.

10. Module (400a, 400b) according to any one of the previous claims, comprising a main body (242) having a tubular shape as an extension of the connection device (210).

11. Module (400a, 400b) according to the previous claim, wherein the connection device (210) comprises a stop portion (243) having a tubular shape, arranged to connect the junction zone (251) and the main body (242) and intended to prevent the insertion of the main body (242) into the nozzle zone (261a) of the at least one pipe (260).

12. Connection system that comprises two modules (400a, 400b) according to claim 10 or 11, wherein a second connection device (310) comprises a second pipe (360) and a second junction zone (351) having an outer diameter that is less than or equal to an inner diameter of the second pipe (360) and a second clamping device comprising a second clamping collar (320) suitable for being positioned around an outer surface of a nozzle zone (361a) of the second pipe (360); the nozzle zone (361a) being suitable for being connected to the second connection device (310) via fitting onto an outer surface of the second junction zone (351).

13. Connection system according to the previous claim, wherein the second connection device (310) comprises a second main body (342) having a tubular shape as an extension of the second connection device (310); the second connection device (310) and the main body (242) being formed as a single portion of the same tube.

14. Connection system according to claim 12, wherein the second connection device (310) comprises a second main body (342) having a tubular shape as an extension of the second connection device (310); the second connection device (310) and the main body (242) being two different tubes.

15. Connection system according to the previous claim, wherein the main body (242) comprises a peripheral ring (245) having an outer diameter greater than an outer diameter of the rest of the main body (242), the second connection device (310) comprising at least one clamp (231a, 231b) installed outside of the second junction zone (351) and configured to be fastened to the peripheral ring (245) and locked.

16. Irrigation facility that comprises at least one connection module (400a, 400b) according to any one of claims 1 to 11 or a connection system according to any one of claims 12 to 15 and at least one flexible pipe (260).
